# EUROPÄISCHE PATENTSCHRIFT

(11) **EP 2 052 213 B1**
(45) Veröffentlichungstag und Bekanntmachung des Hinweises auf die Patenterteilung: **14.10.2015**
(21) Anmeldenummer: 07847241.2
(22) Anmeldetag: 21.11.2007
(51) Int. Cl.: G01C 21/32

(54) **VERFAHREN UND VORRICHTUNG ZUM SPEICHERN BZW. DARSTELLEN VON VORGEGEBENEN GEOMETRISCHEN OBJEKTEN UND COMPUTERPROGRAMMPRODUKT**
METHOD AND APPARATUS FOR STORING OR DISPLAYING PRESPECIFIED GEOMETRIC OBJECTS AND COMPUTER PROGRAM PRODUCT
PROCÉDÉ ET DISPOSITIF DE MISE EN MÉMOIRE ET DE PRÉSENTATION D'OBJETS GÉOMÉTRIQUES PRÉDÉTERMINÉS ET PRODUIT DE PROGRAMME INFORMATIQUE

(30) Priorität: 24.11.2006 DE 102006055958
(43) Veröffentlichungstag der Anmeldung: 29.04.2009
(73) Patentinhaber: Continental Automotive GmbH, 30165 Hannover (DE)
(72) Erfinder: PFEIFLE, Martin, 93142 Maxhütte-Haidhof (DE); SASSE, Volker, 93138 Lappersdorf (DE); TANTZ, Uwe, 93152 Nittendorf (DE)
(86) Internationale Anmeldenummer: PCT/EP2007/062607
(87) Internationale Veröffentlichungsnummer: WO 2008/062003

(56) Entgegenhaltungen:
- US-A- 6 092 076
- US-A1- 2006 195 858

## Beschreibung

Die Erfindung betrifft ein Verfahren und eine Vorrichtung zum Speichern von vorgegebenen geometrischen Objekten auf einem Speichermedium. Ferner betrifft die Erfindung ein Verfahren und eine Vorrichtung zum Darstellen der vorgegebenen geometrischen Objekte auf einer Anzeigevorrichtung. Ferner betrifft die Erfindung ein Computerprogrammprodukt.

Ein modernes Navigationsgerät verfügt in der Regel über zumindest eine Landkarte, die auf einem Speichermedium des Navigationsgeräts gespeichert ist. Vorzugsweise wird die Landkarte möglichst naturgetreu abgespeichert. Zum Navigieren wird die Landkarte möglichst naturgetreu dargestellt, um eine Navigation und eine Orientierung anhand der Landkarte zu erleichtern. Die Landkarte ist eine Anordnung vieler vorgegebener geometrischer Objekte. Das Navigationsgerät, insbesondere das Speichermedium, verfügt in der Regel lediglich über eine begrenzte Speicherkapazität, da das Navigationsgerät naturgemäß mobil sein soll und viel Speicherplatz auch viel Raumbedarf und/oder Gewichtsbedarf bedeutet.

Es ist Aufgabe der Erfindung, ein Verfahren und eine Vorrichtung zum Speichern von vorgegebenen geometrischen Objekten zu schaffen, das beziehungsweise die einfach das Abspeichern einer großen Anzahl der vorgegebenen geometrischen Objekte ermöglicht.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich aus gemäß eines ersten Aspekts der Erfindung durch ein Verfahren und eine Vorrichtung zum Speichern von vorgegebenen geometrischen Objekten auf einem Speichermedium. Von jedem der vorgegebenen geometrischen Objekte wird zu zumindest einem weiteren der vorgegebenen geometrischen Objekte jeweils ein Abstand ermittelt, der repräsentativ ist für eine Ähnlichkeit der entsprechenden vorgegebenen geometrischen Objekte. Abhängig von den Abständen der vorgegebenen geometrischen Objekte zueinander werden die vorgegebenen geometrischen Objekte in Gruppen so zusammengefasst, dass die vorgegebenen geometrischen Objekte gegenüber vorgegebenen geometrischen Objekten derselben Gruppe ähnlicher sind als gegenüber vorgegebenen geometrischen Objekten der anderen Gruppen. Für jede Gruppe wird abhängig von den vorgegebenen geometrischen Objekten innerhalb der Gruppen ein Repräsentant ermittelt. Der Repräsentant erfüllt im Hinblick auf seine Ähnlichkeit zu den vorgegebenen geometrischen Objekten der entsprechenden Gruppe ein Gütekriterium, das von den Abständen des Repräsentanten zu den einzelnen vorgegebenen geometrischen Objekten der entsprechenden Gruppe abhängt. Die Repräsentanten aller Gruppen werden abgespeichert. Stellvertretend für die vorgegebenen geometrischen Objekte werden zu jedem der vorgegebenen geometrischen Objekte Werte, eine Kennung des vorgegebenen geometrischen Objekts und ein Verweis auf den entsprechenden Repräsentanten des vorgegebenen geometrischen Objekts abgespeichert. Durch die Werte werden eine Größe und eine Lage des entsprechenden Repräsentanten abhängig von der Größe und der Lage des entsprechenden vorgegebenen geometrischen Objekts vorgegeben.

Dies ermöglicht, insbesondere bei einer vorgegebenen Speicherkapazität, weit mehr vorgegebene geometrische Objekte mit einer vorgegebenen Genauigkeit zu speichern, als es beim Speichern der vorgegebenen geometrischen Objekte selbst möglich wäre. Die vorgegebenen geometrischen Objekte sind beispielsweise Linien, Polygone und/oder einfache zwei- oder dreidimensionale Körper. Vorzugsweise werden die Repräsentanten, die Kennungen und die Werte zunächst auf einem Speichermedium eines stationären Rechners gespeichert, um dann auf das Speichermedium kopiert zu werden, das vorzugsweise in einem Navigationsgerät angeordnet ist.

Ein Computerprogramm zum Zusammenfassen der vorgegebenen geometrischen Objekte in Gruppen kann eine Funktion zum Ermitteln des Abstandes umfassen oder aufrufen. Die Werte können beispielsweise Parameter einer Transformationsmatrix sein. Mit der Transformationsmatrix werden beispielsweise Koordinaten transformiert und/oder Vektoren multipliziert, die die vorgegebenen geometrischen Objekte beschreiben. Die Werte werden zugeordnet zu den Kennungen der vorgegebenen geometrischen Objekte abgespeichert. Alternativ oder zusätzlich können die Werte Koordinaten umfassen, an denen charakteristische Punkte der vorgegebenen geometrischen Objekte, beispielsweise Ecken und/oder Start- und/oder Endpunkte von Linien, aufgehängt werden, und/oder zwischen denen die Repräsentanten aufgespannt werden.

In einer vorteilhaften Ausgestaltung des ersten Aspekts der Erfindung sind die vorgegebenen geometrischen Objekte in einer vorgegebenen Anordnung angeordnet. Durch die Werte werden die Größe und die Lage der Repräsentanten in der vorgegebenen Anordnung vorgegeben. Dies ermöglicht, die vorgegebene Anordnung mit weit mehr vorgegebenen geometrischen Objekten mit einer vorgegebenen Genauigkeit zu speichern, als es beim Speichern der vorgegebenen geometrischen Objekte selbst möglich wäre.

In einer weiteren vorteilhaften Ausgestaltung des ersten Aspekts der Erfindung umfassen die vorgegebenen geometrischen Objekte Linien. Zum Ermitteln des Abstands zwischen zwei der Linien werden die Linien so verschoben, dass jeweils ein Startpunkt der beiden Linien in einem Koordinatenursprung eines Koordinatensystems liegt. Die Linien werden so gedreht und gestreckt oder gestaucht, dass jeweils ein Endpunkt der beiden Linien auf einer vorgegebenen Stelle einer Achse des Koordinatensystems liegt. An vorgegebenen Stützstellen wird eine Entfernung zwischen den beiden Linien ermittelt. Der Abstand zwischen den beiden Linien wird ermittelt abhängig von den Entfernungen der beiden Linien an den Stützstellen. Falls die Anordnung eine Landkarte ist, so sind die Linien vorzugsweise Straßenverläufe. Durch das Verschieben, das Drehen, Strecken beziehungsweise Stauchen werden ein Verschiebungsvektor, ein Drehwinkel beziehungsweise ein Streckungsfaktor vorgegeben. Der Verschiebungsvektor, der Drehwinkel und/oder der Streckungsfaktor sind beispielsweise die Werte, insbesondere die Parameter, durch die die Größe und die Lage der Repräsentanten ermittelt werden kann. Eine Transformationsmatrix mit diesen Parametern kann invertiert werden, damit die Größe und Lage der Repräsentanten ermittelt werden kann. Vorzugsweise wird ferner beachtet, dass durch die Repräsentanten ein topologisch geschlossenes Netzwerk geschaffen wird. Alternativ dazu können als Werte die Koordinaten der Start- und Endpunkte der Linien gespeichert werden, wobei zum Darstellen der Anordnung beispielsweise Startpunkte der entsprechenden Repräsentanten an Startpunkte der entsprechenden Linien verschoben werden und wobei die Repräsentanten so gedreht, gestaucht oder gestreckt werden, bis die Endpunkte der Repräsentanten auf den Endpunkten der entsprechenden Linien liegen. Dies trägt einfach dazu bei, dass die Anordnung topologisch geschlossen ist. In diesem Zusammenhang sind die Linien vorzugsweise Straßenverläufe.

Das im Vorangehenden erläuterte Ermitteln des Abstandes zwischen zwei Linien, insbesondere zwischen zwei Straßenverläufen, kann auch ein eigenständiger Aspekt der Erfindung sein unabhängig von dem Speichern der vorgegebenen geometrischen Objekte. Falls das Ermitteln des Abstands zwischen den Linien unabhängig von dem Speichern der vorgegebenen geometrischen Objekte ist, werden die Linien zunächst elektronisch erfasst. Danach wird der Abstand zwischen den Linien gemäß dem Vorangehenden ermittelt. Der Abstand kann dann als Längenmaß ausgegeben werden und eine Eingangsgröße für unterschiedliche Applikationen sein.

In einer weiteren vorteilhaften Ausgestaltung des ersten Aspekts der Erfindung werden die vorgegebenen geometrischen Objekte so in Gruppen zusammengefasst, dass die jeweils paarweisen Abstände der vorgegebenen geometrischen Objekte zueinander innerhalb der entsprechenden Gruppe kleiner sind als ein vorgegebener erster Abstandsschwellenwert. Dies trägt auf einfache Weise dazu bei, ähnliche vorgegebene geometrische Objekte in einer Gruppe zusammenzufassen.

In einer weiteren vorteilhaften Ausgestaltung des ersten Aspekts der Erfindung werden abhängig von den Abständen der vorgegebenen geometrischen Objekte zu ihren Repräsentanten Fehlerwerte ermittelt. Die Fehlerwerte werden der Kennung der vorgegebenen geometrischen Objekte zugeordnet und abgespeichert. Dies ermöglicht einfach eine Güte der abgespeicherten Anordnung zu ermitteln.

In einer weiteren vorteilhaften Ausgestaltung des ersten Aspekts der Erfindung umfasst die Anordnung eine Landkarte. Die vorgegebenen geometrischen Objekte umfassen Straßenverläufe, Gebäude, Plätze und/oder natürliche Objekte. Dies ermöglicht, die Landkarte abzuspeichern, auch wenn die Speicherkapazität des Speichermediums beschränkt ist und auch wenn die Anzahl der vorgegebenen geometrischen Objekte in der Landkarte besonders hoch ist. Ferner ermöglicht dies, die Landkarte vorzugsweise möglichst naturgetreu darzustellen.

In einer weiteren vorteilhaften Ausgestaltung des ersten Aspekts der Erfindung wird abhängig von der Speicherkapazität des Speichermediums, auf dem die vorgegebenen geometrischen Objekte gespeichert werden sollen, eine mögliche Repräsentantenzahl ermittelt. Die vorgegebenen geometrischen Objekte werden so in Gruppen zusammengefasst, dass eine Gruppenanzahl der Gruppen der möglichen Repräsentantenanzahl entspricht.

Dies kann dazu beitragen, dass vorzugsweise möglichst viele der vorgegebenen geometrischen Objekte vorzugsweise möglichst genau abgespeichert werden.

Die Erfindung zeichnet sich aus gemäß eines zweiten Aspekts der Erfindung durch ein Verfahren und eine Vorrichtung zum Darstellen der vorgegebenen geometrischen Objekte auf einer Anzeigevorrichtung. Die Vorrichtung umfasst das Speichermedium, auf dem repräsentativ für die vorgegebenen geometrischen Objekte die Repräsentanten abgespeichert sind. Ferner sind auf dem Speichermedium repräsentativ für die Größe und Lage der Repräsentanten die Werte abgespeichert. Die Werte sind abhängig von der Größe und der Lage der vorgegebenen geometrischen Objekte. Zum Darstellen wird für jedes vorgegebene geometrische Objekt einer der Repräsentanten ermittelt. Der Repräsentant repräsentiert die Gruppe der vorgegebenen geometrischen Objekte mit dem entsprechenden vorgegebenen geometrischen Objekt und erfüllt im Hinblick auf seine Ähnlichkeit zu den vorgegebenen geometrischen Objekten der entsprechenden Gruppe ein Gütekriterium, das von den Abständen des Repräsentanten zu den einzelnen vorgegebenen geometrischen Objekten der entsprechenden Gruppe abhängt. Für jeden der ermittelten Repräsentanten wird anhand der Werte die Lage und die Größe des Repräsentanten ermittelt. Der Repräsentant wird in der ermittelten Lage und Größe dargestellt. Das Navigationsgerät kann auch als Vorrichtung zum Darstellen von vorgegebenen geometrischen Objekten auf einer Anzeigevorrichtung bezeichnet werden.

In einer vorteilhaften Ausgestaltung des zweiten Aspekts der Erfindung werden der Repräsentant und die ihm zugeordneten Werte abhängig von der Kennung ermittelt. Die Kennung ist stellvertretend für das vorgegebene geometrische. Objekt abgespeichert. Der Kennung sind der Repräsentant und die Werte zugeordnet.

In einer weiteren vorteilhaften Ausgestaltung des zweiten Aspekts der Erfindung sind die vorgegebenen geometrischen Objekte in der vorgegebenen Anordnung angeordnet. Durch die Werte werden die Größe und die Lage des Repräsentanten in der vorgegebenen Anordnung vorgegeben.

In einer weiteren vorteilhaften Ausgestaltung des zweiten Aspekts der Erfindung umfasst die Anordnung eine Landkarte. Die vorgegebenen geometrischen Objekte umfassen Straßenverläufe, Gebäude, Plätze und/oder natürliche Objekte.

Die vorteilhaften Ausgestaltungen der beiden Aspekte der Erfindung können ohne weiteres auf vorteilhafte Ausgestaltungen der Verfahren und/oder der Vorrichtungen übertragen werden.

Ferner zeichnet sich die Erfindung aus durch ein Computerprogrammprodukt, das eine computerlesbare Speichereinheit mit Programmanweisungen umfasst, die durch einen Computer ausführbar sind und die ausgebildet sind zum Durchführen des Verfahrens gemäß dem ersten und/oder dem zweiten Aspekt der Erfindung.

Die Erfindung ist im Folgenden anhand von schematischen Zeichnungen näher erläutert. Es zeigen:
- Figur 1: einen Ausschnitt einer Landkarte,
- Figur 2: erste vorgegebene geometrische Objekte,
- Figur 3: zweite vorgegebene geometrische Objekte,
- Figur 4: dritte vorgegebene geometrische Objekte,
- Figur 5: ein Ablaufdiagramm eines Programms zum Speichern der vorgegebenen geometrischen Objekte,
- Figur 6: ein Ablaufdiagramm eines Programms zum Ermitteln einer möglichen Repräsentantenanzahl,
- Figur 7: eine Abstandsbestimmung zwischen zwei Straßenverläufen,
- Figur 8: eine Transformationsmatrix,
- Figur 9: eine Referenztabelle,
- Figur 10: ein Ablaufdiagramm eines Programms zum Darstellen der vorgegebenen geometrischen Objekte.

Elemente gleicher Konstruktion oder Funktion sind figurenübergreifend mit den gleichen Bezugszeichen gekennzeichnet.

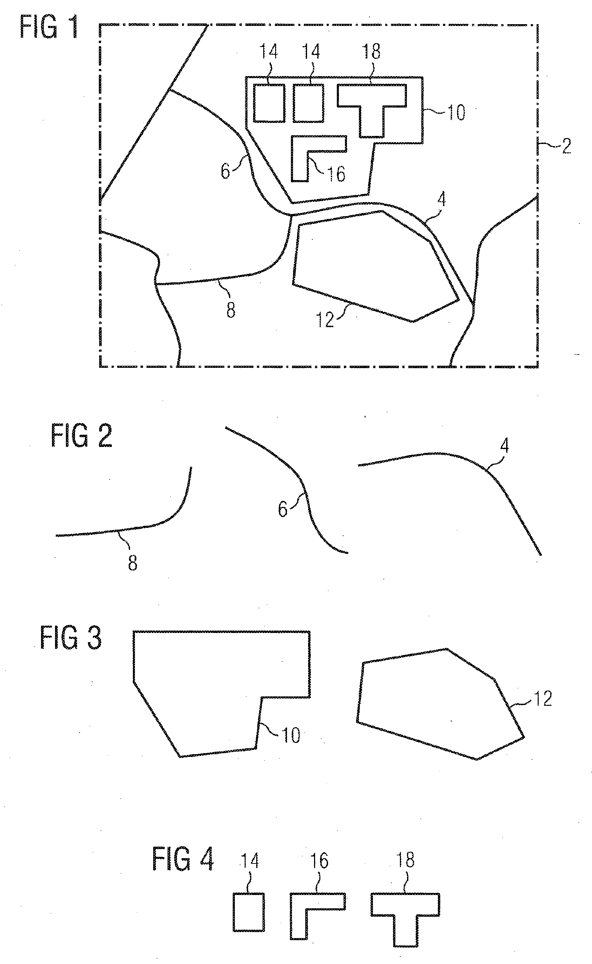

Ein Ausschnitt einer Landkarte 2 (Figur 1) stellt einen Ausschnitt einer vorgegebenen Anordnung mehrerer vorgegebener geometrischer Objekte dar. Die vorgegebenen geometrischen Objekte umfassen Linien, Polygone und einfache geometrische Formen. Die Linien sind vorzugsweise Straßenverläufe, insbesondere ein erster, ein zweiter und ein dritten Straßenverlauf 4, 6, 8 (Figur 2). Die Straßenverläufe erstrecken sich vorzugsweise von einer Straßenkreuzung zu einer nächstliegenden Straßenkreuzung. Die Polygone stellen vorzugsweise Flächen dar, beispielsweise Wälder, Parks, Parkplätze und/oder komplizierte Gebäudestrukturen. Die Polygone umfassen insbesondere ein erstes Polygon 10 und ein zweites Polygon 12 (Figur 3). Die einfachen geometrischen Formen, insbesondere eine erste, eine zweite und eine dritte einfache geometrische Form 14, 16, 18 (Figur 4) werden vorzugsweise genutzt, um Gebäude darzustellen.

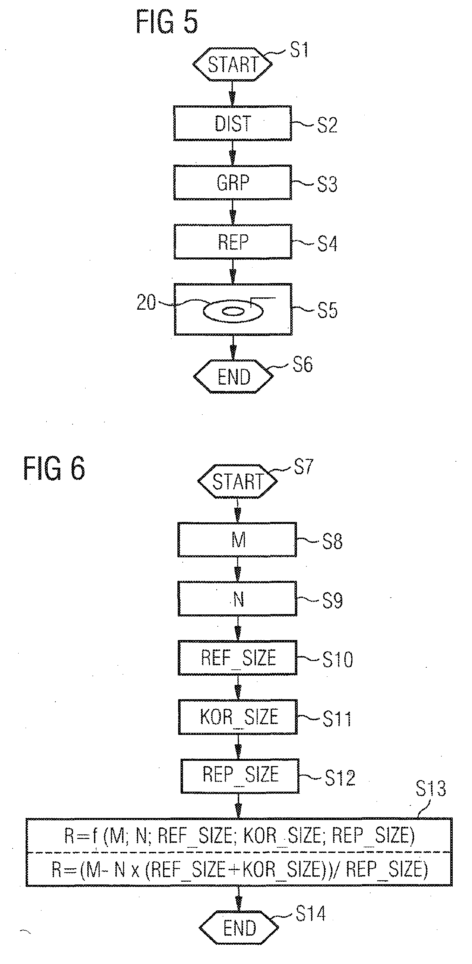

Die Landkarte 2 wird vorzugsweise auf einem Display eines Navigationsgeräts dargestellt. Das Navigationsgerät ist mobil und verfügt daher über ein Speichermedium 20 mit einer lediglich begrenzten Speicherkapazität M (Figur 5, Figur 6). Die vorgegebenen geometrischen Objekte werden vorzugsweise möglichst naturgetreu auf einer Anzeigevorrichtung des Navigationsgeräts dargestellt. Dazu werden die vorgegebenen geometrischen Objekte vorzugsweise möglichst naturgetreu abgespeichert. Dies trägt zu einer einfachen und komfortablen Orientierung und zu einem einfachen Navigieren mit dem Navigationsgerät bei. Aufgrund der begrenzten Speicherkapazität M des Speichermediums 20 können jedoch nicht alle vorgegebenen geometrischen Objekte naturgetreu abgespeichert werden, um dann später naturgetreu dargestellt werden zu können. Daher werden bevorzugt nicht alle vorgegebenen geometrischen Objekte auf dem Speichermedium 20 abgespeichert.

Vorzugsweise ist auf einem Speichermedium eines stationären Rechners ein Programm zum Speichern der vorgegebenen geometrischen Objekte abgespeichert (Figur 5). Der Rechner kann auch als Vorrichtung zum Speichern der vorgegebenen geometrischen Objekte bezeichnet werden. Das Programm zum Speichern der vorgegebenen geometrischen Objekte dient dazu, die vorgegebenen geometrischen Objekte vorzugsweise besonders naturgetreu bei vorzugsweise möglichst geringem Speicherplatzbedarf auf dem Speichermedium des stationären Rechners abzuspeichern. Anschließend werden die vorgegebenen geometrischen Objekte vorzugsweise auf das Speichermedium 20 mit der Speicherkapazität M des Navigationsgeräts kopiert. Das Programm zum Speichern der vorgegebenen geometrischen Objekte wird vorzugsweise in einem Schritt S1 gestartet, in dem gegebenenfalls Variablen initialisiert werden.

In einem Schritt S2 werden Abstände DIST der vorgegebenen geometrischen Objekte zueinander ermittelt. Der Abstand DIST ist ein Maß dafür, wie ähnlich sich je zwei der vorgegebenen geometrischen Objekte sind. Je größer der Abstand DIST zwischen den vorgegebenen geometrischen Objekten ist, desto geringer ist die Ähnlichkeit der entsprechenden vorgegebenen geometrischen Objekte zueinander.

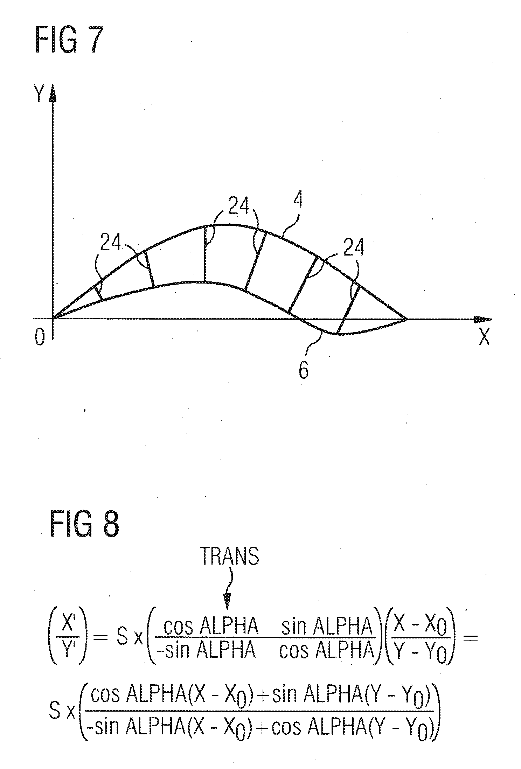

Der Abstand DIST zwischen zwei der Linien, insbesondere zwischen dem ersten Straßenverlauf 4 und dem zweiten Straßenverlauf 6 kann beispielsweise ermittelt werden, indem jeweils ein Startpunkt der beiden Straßenverläufe in beispielsweise einen Koordinatenursprung eines Koordinatensystems (Figur 7) verschoben wird. Daraufhin werden die beiden Straßenverläufe so gedreht, gestreckt oder gestaucht, dass ihre Endpunkte auf einer gemeinsamen Achse an einer gemeinsamen Stelle der entsprechenden Achse zum Liegen kommen. Die Achse ist vorzugsweise eine X-Achse des Koordinatensystems. Anschließend wird an vorgegebenen Stützstellen zwischen den Start- und den Endpunkten der beiden Straßenverläufe jeweils eine Entfernung zwischen den beiden Straßenverläufen ermittelt. Der Abstand DIST wird dann abhängig von den Entfernungen ermittelt. Beispielsweise kann der Abstand DIST einer maximalen Entfernung zwischen den beiden Straßenverläufen entsprechen. Alternativ dazu kann der Abstand DIST beispielsweise ein Durchschnittswert der Entfernungen sein.

In einem Schritt S3 werden die vorgegebenen geometrischen Objekte in Gruppen GRP zusammengefasst. Die vorgegebenen geometrischen Objekte werden vorzugsweise so in Gruppen GRP zusammengefasst, dass die vorgegebenen geometrischen Objekte innerhalb einer der Gruppen GRP gegenüber vorgegebenen geometrischen Objekten derselben Gruppe GRP ähnlicher sind, als gegenüber vorgegebenen geometrischen Objekten einer anderen der Gruppen GRP. Beispielsweise können in eine der Gruppen GRP alle vorgegebenen geometrischen Objekte zusammengefasst werden, deren Abstände DIST zueinander kleiner sind als ein vorgegebener erster Abstandsschwellenwert. Alternativ dazu kann zum Bilden der Gruppen GRP ein handelsüblicher Gruppierungsalgorithmus verwendet werden. Ein derartiger Gruppierungsalgorithmus kann beispielsweise die Abstände DIST als Eingangsparameter benötigen. Alternativ oder zusätzlich kann der Gruppierungsalgorithmus eine Funktion zum Bestimmen der Abstände DIST aufrufen.

In einem Schritt S4 wird für alle vorgegebenen geometrischen Objekte innerhalb einer der Gruppen GRP ein Repräsentant REP ermittelt. Somit wird zu jeder Gruppe GRP je einer der Repräsentanten REP ermittelt, der die vorgegebenen geometrischen Objekte der entsprechenden Gruppe GRP repräsentiert. Der Repräsentant REP kann beispielsweise eines der vorgegebenen geometrischen Objekte sein. Alternativ dazu kann der Repräsentant REP neu ermittelt werden. Vorzugsweise wird der Repräsentant REP so ermittelt, dass er in Bezug auf seine Ähnlichkeit zu den vorgegebenen geometrischen Objekten in der entsprechenden Gruppe GRP, die der Repräsentant REP repräsentiert, ein vorgegebenes Gütekriterium erfüllt. Das vorgegebene Gütekriterium kann beispielsweise umfassen, dass seine Abstände DIST zu den vorgegebenen geometrischen Objekten innerhalb der entsprechenden Gruppe GRP durchschnittlich kleiner sind als die Abstände DIST der übrigen vorgegebenen geometrischen Objekte zu den jeweils anderen vorgegebenen geometrischen Objekten derselben Gruppe GRP. Alternativ oder zusätzlich können die Abstände DIST des Repräsentanten REP zu den übrigen vorgegebenen geometrischen Objekten kleiner sein als ein zweiter vorgegebener Abstandsschwellenwert.

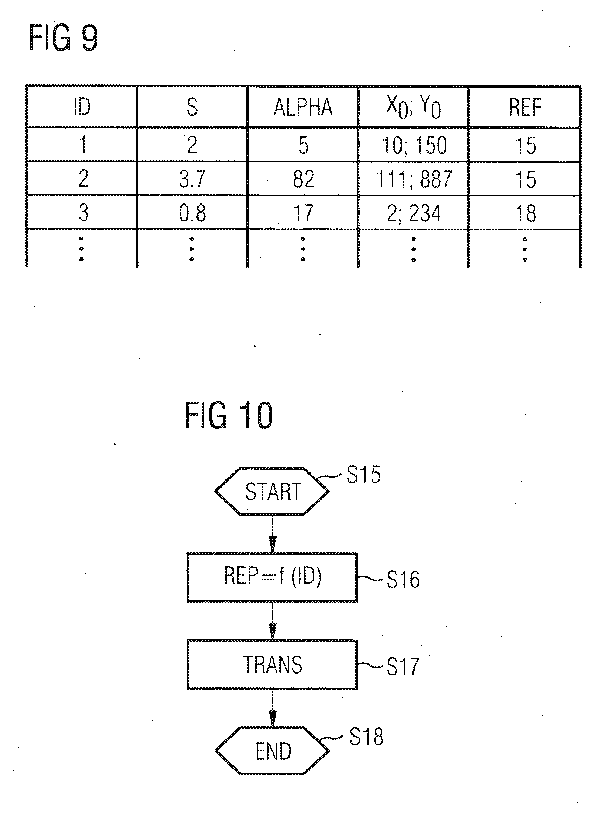

In einem Schritt S5 werden die Repräsentanten REP vorzugsweise zunächst auf dem Speichermedium des stationären Rechners gespeichert und danach auf das Speichermedium 20 des Navigationsgeräts kopiert. Ferner wird vorzugsweise eine Tabelle (Figur 9) gespeichert. Die Tabelle umfasst vorzugsweise eine Kennung ID, die eindeutig dem entsprechenden vorgegebenen geometrischen Objekt zugeordnet ist, Werte, die repräsentativ sind für eine Lage und eine Größe der vorgegebenen geometrischen Objekte und einen Verweis REF auf den entsprechenden Repräsentanten REP.

In einem Schritt S6 kann das Programm zum Speichern der vorgegebenen geometrischen Objekte beendet werden. Vorzugsweise wird das Programm zum Speichern der vorgegebenen geometrischen Objekte dazu verwendet, um die Anordnung der vorgegebenen geometrischen Objekte als Landkarte 2 abzuspeichern. In diesem Zusammenhang repräsentieren die Werte die Größe und die Lage der vorgegebenen geometrischen Objekte innerhalb der Landkarte 2.

Zum Darstellen der vorgegebenen geometrischen Objekte ist vorzugsweise ein Programm zum Darstellen der vorgegebenen geometrischen Objekte auf dem Speichermedium 20 des Navigationsgeräts gespeichert (Figur 10). Das Programm zum Darstellen der vorgegebenen geometrischen Objekte dient dazu, anstatt der geometrischen Objekte die Repräsentanten REP so darzustellen, dass sie die vorgegebenen geometrischen Objekte vorzugsweise besonders naturgetreu repräsentieren. Das Programm zum Darstellen der vorgegebenen geometrischen Objekte wird in einem Schritt S15 gestartet, in dem gegebenenfalls Variablen initialisiert werden.

In einem Schritt S16 werden anhand der Kennungen ID anstelle der vorgegebenen geometrischen Objekte die Repräsentanten REP geladen.

In einem Schritt S17 werden anhand der Werte, die den Kennungen ID zugeordnet sind, eine Größe und eine Lage der Repräsentanten REP ermittelt. Ferner werden in dem Schritt S17 die Repräsentanten REP abhängig von den Werten transformiert und auf der Anzeigevorrichtung des Navigationsgeräts ausgegeben. Die Werte, die sich auf die Größe und die Lage der Repräsentanten REP beziehen, können vorzugsweise der Tabelle entnommen werden. Die Größe und die Lage der Repräsentanten REP sind abhängig von der Größe und der Lage der vorgegebenen geometrischen Objekte. Vorzugsweise werden abhängig von der Größe und der Lage der vorgegebenen geometrischen Objekte die Werte ermittelt, die dann zum Ermitteln der Größe und der Lage der Repräsentanten REP verwendet werden.

In einem Schritt S18 kann das Programm zum Darstellen der vorgegebenen geometrischen Objekte beendet werden. Vorzugsweise wird das Programm zum Darstellen der vorgegebenen geometrischen Objekte dazu verwendet, die vorgegebene Anordnung oder zumindest einen Teil der vorgegebenen Anordnung der vorgegebenen geometrischen Objekte als Landkarte 2 beziehungsweise als Ausschnitt der Landkarte 2 darzustellen. Dazu kann abhängig von den Werten die Größe und die Lage der Repräsentanten REP innerhalb der Landkarte 2 ermittelt werden. Das Programm zum Darstellen der vorgegebenen geometrischen Objekte wird regelmäßig während des Betriebs des Navigationsgeräts abgearbeitet, und zwar immer dann, wenn ein neuer Ausschnitt der Landkarte 2 dargestellt werden muss.

Die Größe und die Lage der Repräsentanten REP kann beispielsweise dadurch ermittelt werden, dass die Werte Koordinaten von charakteristischen Punkten der vorgegebenen geometrischen Objekte umfassen und dass die Koordinaten abgespeichert werden. Die charakteristischen Punkte können beispielsweise Start- und/oder Endpunkte der Linien und/oder Ecken der Polygone oder der einfachen vorgegebenen geometrischen Formen sein. Die Repräsentanten REP können dann mit den charakteristischen Punkten an den abgespeicherten Koordinaten aufgehängt werden und/oder zwischen den abgespeicherten Koordinaten aufgespannt werden. Letzteres ist besonders vorteilhaft, wenn die Abstände der Linien, insbesondere der Straßenverläufe wie im Vorangehenden erläutert ermittelt werden, denn dann ist eine korrekte Lage der Start- und Endpunkte garantiert, was zu einem topologisch geschlossenen Netzwerk führt.

Alternativ dazu kann die Größe und die Lage der Repräsentanten REP dadurch ermittelt werden, dass die abgespeicherten Werte Parameter einer Transformationsmatrix TRANS (Figur 6) umfassen. Die Parameter sind beispielsweise ein Verschiebungswert X₀ in X-Richtung, ein Verschiebungswert Y₀ in Y-Richtung, ein Streckungsfaktor S und ein Drehwinkel ALPHA. Durch die Verschiebungswerte können die Repräsentanten REP beispielsweise ausgehend von dem Koordinatenursprung so in der Landkarte verschoben werden, bis einer der charakteristischen Punkte der Repräsentanten REP an einer ihm zugeordneten Koordinate liegt. Daraufhin wird der Repräsentant REP abhängig von dem Drehwinkel ALPHA so lange gedreht, und abhängig von dem Streckungsfaktor S so lange gestreckt oder gestaucht, bis alle Punkte des Repräsentanten REP auf ihren vorgegebenen Koordinaten liegen, damit ein Netzwerk aus den Linien, insbesondere ein Netzwerk aus den Straßenverläufen topologisch geschlossen ist. Vorzugsweise wird dies mit Hilfe homogener Koordinaten und der Transformationsmatrix TRANS durchgeführt. Ein X-Abbildungswert X' eines X-Werts X und ein Y-Abbildungswert Y' eines Y-Wertes Y der einzelnen Punkte werden dann vorzugsweise anhand der Berechnungsvorschrift der Figur 8 ermittelt. Zum Darstellen der Repräsentanten REP wird die Transformationsmatrix TRANS auf die Repräsentanten REP angewandt.

Die Speicherkapazität M des Speichermediums 20 des Navigationsgeräts kann vorzugsweise optimal ausgenutzt werden, wenn eine Repräsentantenanzahl R auf die Speicherkapazität M angepasst wird. Je mehr Repräsentanten REP abgespeichert werden, desto ähnlicher können diese Repräsentanten REP zu den vorgegebenen geometrischen Objekten sein. Das bedeutet, dass mit zunehmendem Speicherplatzbedarf aufgrund einer zunehmenden Repräsentantenanzahl R auch eine Genauigkeit der dargestellten Landkarte 2 verbessert wird. Somit ist es besonders vorteilhaft, die Repräsentantenanzahl R auf die Speicherkapazität M des Speichermediums 20 des Navigationsgeräts anzupassen. Dazu ist vorzugsweise auf dem Speichermedium des stationären Rechners ein Programm zum Ermitteln der Repräsentantenanzahl R gespeichert (Figur 6). Das Programm zum Ermitteln der Repräsentantenanzahl R wird vorzugsweise in einem Schritt S7 gestartet, in dem gegebenenfalls Variablen initialisiert werden.

In einem Schritt S8 wird die Speicherkapazität M des Speichermediums 20 des Navigationsgeräts ermittelt. Vorzugsweise wird dieser Schritt lediglich einmal durchgeführt. Die Speicherkapazität M ist dann bekannt und kann bei einem erneuten Abarbeiten des Programms zum Ermitteln der Repräsentantenanzahl R vorgegeben werden.

In einem Schritt S9 wird eine Objektanzahl N der vorgegebenen geometrischen Objekte ermittelt.

In einem Schritt S10 wird eine Größe REF_SIZE eines Verweises ermittelt, durch den dem vorgegebenen geometrischen Objekt der entsprechende Repräsentant REP zugewiesen wird. Die Größe REF_SIZE des Verweises bedeutet in diesem Zusammenhang einen Speicherplatzbedarf, den der entsprechende Verweis benötigt.

In einem Schritt S11 kann eine Größe KOR_SIZE der Werte ermittelt werden. Die Größe KOR_SIZE der Werte bedeutet in diesem Zusammenhang einen Speicherplatzbedarf, den die Werte, insbesondere die Koordinaten und/oder die Parameter benötigen.

In einem Schritt S12 wird eine Größe REP_SIZE der Repräsentanten REP ermittelt. Die Größe REP_SIZE der Repräsentanten REP repräsentiert in diesem Zusammenhang die Menge an Speicherplatz, die der entsprechende Repräsentant REP benötigt. Beispielsweise kann dafür ein empirisch ermittelter Durchschnittswert des Speicherplatzes für den Repräsentanten REP verwendet werden.

In einem Schritt S13 wird abhängig von der Speicherkapazität M, von der Objektanzahl N, von der Größe REF_SIZE des Verweises, von der Größe KOR_SIZE der Werte und von der Größe REF_SIZE der Repräsentanten REP die Repräsentantenanzahl R ermittelt, vorzugsweise nach der in dem Schritt S13 angegebenen Berechnungsvorschrift.

In einem Schritt S14 wird das Programm zum Ermitteln der Repräsentantenanzahl R vorzugsweise beendet.

Zusätzlich kann zu jedem der vorgegebenen geometrischen Objekte abhängig von dem Abstand DIST des entsprechenden vorgegebenen geometrischen Objekts zu dem ihm zugeordneten Repräsentanten REP ein Fehlerwert ermittelt werden. Der Fehlerwert ist repräsentativ dafür, wie stark das entsprechende vorgegebene geometrische Objekt von seinem Repräsentanten abweicht. Abhängig von allen Fehlerwerten kann dann eine Güte der Darstellung aller vorgegebenen geometrischen Objekte, insbesondere der Landkarte 2 ermittelt werden. Die Güte ist dann ein Maß dafür, wie naturgetreu die Landkarte 2 abgespeichert ist und/oder darstellbar ist.

Programmanweisungen des Programms zum Speichern der geometrischen Objekte und/oder des Programms zum Darstellen der geometrischen Objekte können auf einer computerlesbaren Speichereinheit eines Computerprogrammprodukts gespeichert sein. Die Speichereinheit ist beispielsweise eine CD und/oder eine DVD.

Die Erfindung ist nicht auf die angegebenen Ausführungsbeispiele beschränkt. Beispielsweise können für unterschiedliche vorgegebene geometrische Objekte unterschiedliche Abstandsfunktionen verwendet werden. Ferner können das Programm zum Ermitteln der Repräsentantenanzahl R und das Programm zum Speichern der vorgegebenen geometrischen Objekte in einem Programm implementiert sein. Ferner kann das Navigationsgerät ein oder mehrere weitere Speichermedien 20 umfassen. Das Speichermedium 20 kann beispielsweise eine Festplatte, eine CD und/oder ein Flashspeicher sein.

## Patentansprüche

1. Verfahren zum Speichern von vorgegebenen geometrischen Objekten auf einem Speichermedium (20), bei dem
- von jedem der vorgegebenen geometrischen Objekte zu zumindest einem weiteren der vorgegebenen geometrischen Objekte jeweils ein Abstand (DIST) ermittelt wird, der repräsentativ ist für eine Ähnlichkeit der entsprechenden vorgegebenen geometrischen Objekte,
- abhängig von den Abständen (DIST) der vorgegebenen geometrischen Objekte zueinander die vorgegebenen geometrischen Objekte in Gruppen (GRP) so zusammengefasst werden, dass die vorgegebenen geometrischen Objekte gegenüber vorgegebenen geometrischen Objekten derselben Gruppe (GRP) ähnlicher sind als gegenüber vorgegebenen geometrischen Objekten der anderen Gruppen (GRP),
- für jede Gruppe (GRP) abhängig von den vorgegebenen geometrischen Objekten innerhalb der Gruppen (GRP) ein Repräsentant (REP) ermittelt wird, der im Hinblick auf seine Ähnlichkeit zu den vorgegebenen geometrischen Objekten der entsprechenden Gruppe (GRP) ein Gütekriterium erfüllt, das von den Abständen (DIST) des Repräsentanten (REP) zu den einzelnen vorgegebenen geometrischen Objekten der entsprechenden Gruppe (GRP) abhängt,
- die Repräsentanten (REP) aller Gruppen (GRP) abgespeichert werden,
- stellvertretend für die vorgegebenen geometrischen Objekte zu jedem der vorgegebenen geometrischen Objekte lediglich eine Kennung (ID) des vorgegebenen geometrischen Objekts, ein Verweis auf den entsprechenden Repräsentanten (REP) des vorgegebenen geometrischen Objekts und Werte abgespeichert werden, durch die eine Größe und eine Lage des entsprechenden Repräsentanten (REP) vorgegeben wird abhängig von der Größe und der Lage der entsprechenden vorgegebenen geometrischen Objekte.

2. Verfahren nach Anspruch 1, bei dem die vorgegebenen geometrischen Objekte in einer vorgegebenen Anordnung angeordnet sind und bei dem durch die Werte die Größe und die Lage der Repräsentanten (REP) in der vorgegebenen Anordnung vorgegeben werden.

3. Verfahren nach einem der vorstehenden Ansprüche, bei dem die vorgegebenen geometrischen Objekte Linien umfassen und bei dem zum Ermitteln des Abstands (DIST) zwischen zwei der Linien
- die Linien so verschoben werden, dass jeweils ein Startpunkt der beiden Linien in einem Koordinatenursprung eines Koordinatensystems liegt,
- die Linien so gedreht bzw. gestreckt oder gestaucht werden, dass jeweils ein Endpunkt der beiden Linien auf einer vorgegebenen Stelle einer Achse des Koordinatensystems liegt,
- an vorgegebenen Stützstellen (24) eine Entfernung zwischen den beiden Linien ermittelt wird,
- der Abstand (DIST) zwischen den beiden Linien ermittelt wird abhängig von den Entfernungen der beiden Linien an den Stützstellen (24).

4. Verfahren nach einem der vorstehenden Ansprüche, bei dem die vorgegebenen geometrischen Objekte so in den Gruppen (GRP) zusammengefasst werden, dass die jeweils paarweisen Abstände (DIST) der vorgegebenen geometrischen Objekte zueinander innerhalb der entsprechenden Gruppe (GRP) kleiner sind als ein vorgegebener erster Abstandsschwellenwert.

5. Verfahren nach einem der vorstehenden Ansprüche, bei dem abhängig von den Abständen (DIST) der vorgegebenen geometrischen Objekte zu ihren Repräsentanten (REP) Fehlerwerte ermittelt werden und bei dem die Fehlerwerte der Kennung (ID) der vorgegebenen geometrischen Objekte zugeordnet und abgespeichert werden.

6. Verfahren nach Anspruch 2, bei dem die Anordnung eine Landkarte (2) umfasst und bei dem die vorgegebenen geometrischen Objekte Straßenverläufe, Gebäude, Plätze und/oder natürliche Objekte umfassen.

7. Verfahren nach einem der vorstehenden Ansprüche, bei dem
- abhängig von einer Speicherkapazität (M) des Speichermediums (20) eine mögliche Repräsentantenanzahl (R) ermittelt wird,
- die vorgegebenen geometrischen Objekte so in Gruppen (GRP) zusammengefasst werden, dass eine Gruppenanzahl der Gruppen (GRP) der möglichen Repräsentantenanzahl (R) entspricht.

8. Vorrichtung zum Speichern von vorgegebenen geometrischen Objekten auf einem Speichermedium (20), wobei die Vorrichtung ausgebildet ist zum
- Ermitteln jeweils eines Abstands (DIST) von jedem der vorgegebenen geometrischen Objekte zu zumindest einem weiteren der vorgegebenen geometrischen Objekte, wobei der Abstand (DIST) repräsentativ ist für eine Ähnlichkeit der entsprechenden vorgegebenen geometrischen Objekte,
- Zusammenfassen der vorgegebenen geometrischen Objekte in Gruppen (GRP) abhängig von den Abständen (DIST) der vorgegebenen geometrischen Objekte zueinander, so dass die vorgegebenen geometrischen Objekte gegenüber vorgegebenen geometrischen Objekten derselben Gruppe (GRP) ähnlicher sind als gegenüber vorgegebenen geometrischen Objekten der anderen Gruppen (GRP),
- Ermitteln eines Repräsentanten (REP) für jede Gruppe (GRP), der im Hinblick auf seine Ähnlichkeit zu den vorgegebenen geometrischen Objekten der entsprechenden Gruppe (GRP) ein Gütekriterium erfüllt, das von den Abständen (DIST) des Repräsentanten (REP) zu den einzelnen vorgegebenen geometrischen Objekten der entsprechenden Gruppe (GRP) abhängt, abhängig von den vorgegebenen geometrischen Objekten innerhalb der Gruppen (GRP),
- Abspeichern der Repräsentanten (REP) aller Gruppen (GRP),
- Abspeichern lediglich einer Kennung (ID) des vorgegebenen geometrischen Objekts zu jedem der vorgegebenen geometrischen Objekte stellvertretend für die vorgegebenen geometrischen Objekte, eines Verweises auf den entsprechenden Repräsentanten (REP) des vorgegebenen geometrischen Objekts und von Werten, durch die eine Größe und eine Lage des entsprechenden Repräsentanten (REP) vorgegeben wird, abhängig von der Größe und der Lage der entsprechenden vorgegebenen geometrischen Objekte.

9. Verfahren zum Darstellen von vorgegebenen geometrischen Objekten auf einer Anzeigevorrichtung, wobei auf einem Speichermedium (20) repräsentativ für die vorgegebenen geometrischen Objekte Repräsentanten (REP) abgespeichert sind und wobei auf dem Speichermedium (20) repräsentativ für eine Größe und Lage der Repräsentanten (REP) Werte abgespeichert sind, die abhängig sind von einer Größe und einer Lage der vorgegebenen geometrischen Objekte, bei dem
- für jedes vorgegebene geometrische Objekt einer der Repräsentanten (REP) ermittelt wird, der eine Gruppe (GRP) der vorgegebenen geometrischen Objekte mit dem entsprechenden vorgegebenen geometrischen Objekt repräsentiert und der im Hinblick auf seine Ähnlichkeit zu den vorgegebenen geometrischen Objekten der entsprechenden Gruppe (GRP) ein Gütekriterium erfüllt, das von den Abständen (DIST) des Repräsentanten (REP) zu den einzelnen vorgegebenen geometrischen Objekten der entsprechenden Gruppe (GRP) abhängt,
- für jeden der ermittelten Repräsentanten (REP) anhand der Werte eine Lage und eine Größe des Repräsentanten (REP) ermittelt wird,
- der Repräsentant (REP) in der ermittelten Lage und Größe dargestellt wird.

10. Verfahren nach Anspruch 9, bei dem der Repräsentant (REP) und die ihm zugeordneten Werte abhängig von einer Kennung (ID) ermittelt werden, die stellvertretend für das vorgegebene geometrische Objekt abgespeichert ist und der der Repräsentant (REP) und die Werte zugeordnet sind.

11. Verfahren nach einem der Ansprüche 9 oder 10, bei dem die vorgegebenen geometrischen Objekte in einer vorgegebenen Anordnung angeordnet sind und bei dem durch die Werte die Größe und die Lage der Repräsentanten (REP) in der vorgegebenen Anordnung vorgegeben werden.

12. Verfahren nach einem der Ansprüche 10 oder 11, bei dem die Anordnung eine Landkarte (2) umfasst und bei dem die vorgegebenen geometrischen Objekte Straßenverläufe, Gebäude, Plätze und/oder natürliche Objekte umfassen.

13. Vorrichtung zum Darstellen von vorgegebenen geometrischen Objekten auf einer Anzeigevorrichtung, wobei auf einem Speichermedium (20) repräsentativ für vorgegebene geometrische Objekte Repräsentanten (REP) abgespeichert sind und wobei auf dem Speichermedium (20) repräsentativ für eine Größe und Lage der Repräsentanten (REP) Werte abgespeichert ist, die abhängig sind von einer Größe und einer Lage der vorgegebenen geometrischen Objekte, wobei die Vorrichtung ausgebildet ist zum
- Ermitteln eines der Repräsentanten (REP) für jedes vorgegebene geometrische Objekt, wobei der Repräsentant (REP) eine Gruppe (GRP) der vorgegebenen geometrischen Objekte mit dem entsprechenden vorgegebenen geometrischen Objekt repräsentiert und wobei der Repräsentant (REP) im Hinblick auf seine Ähnlichkeit zu den vorgegebenen geometrischen Objekten der entsprechenden Gruppe (GRP) ein Gütekriterium erfüllt,
- für jeden der ermittelten Repräsentanten (REP) anhand der Werte eine Lage und eine Größe des Repräsentanten (REP) ermittelt wird,
- der Repräsentant (REP) in der ermittelten Lage und Größe dargestellt wird.

14. Computerprogrammprodukt, das eine computerlesbare Speichereinheit mit Programmanweisungen umfasst, die durch einen Computer ausführbar sind und die ausgebildet sind zum Durchführen des Verfahrens nach einem der Ansprüche 1 bis 7 und/oder nach einem der Ansprüche 9 bis 12.

## Claims

1. Method for storing prespecified geometric objects on a storage medium (20), in which
- a respective distance (DIST) is determined between each of the prespecified geometric objects and at least one other of the prespecified geometric objects, said distance being representative of similarity of the corresponding prespecified geometric objects,
- the prespecified geometric objects are combined into groups (GRP) on the basis of the distances (DIST) between the prespecified geometric objects in such a manner that the prespecified geometric objects are more similar to prespecified geometric objects in the same group (GRP) than to prespecified geometric objects in the other groups (GRP),
- a representative (REP) is determined for each group (GRP) on the basis of the prespecified geometric objects inside the groups (GRP), said representative meeting a quality criterion with regard to its similarity to the prespecified geometric objects in the corresponding group (GRP), said quality criterion depending on the distances (DIST) between the representative (REP) and the individual prespecified geometric objects in the corresponding group (GRP),
- the representatives (REP) of all groups (GRP) are stored,
- only an identifier (ID) of the prespecified geometric object, a reference to the corresponding representative (REP) of the prespecified geometric object and values which prespecify a size and position of the corresponding representative (REP) on the basis of the size and position of the corresponding prespecified geometric objects are stored for each of the prespecified geometric objects in a manner representative of the prespecified geometric objects.

2. Method according to Claim 1, in which the prespecified geometric objects are arranged in a prespecified arrangement, and in which the values prespecify the size and position of the representatives (REP) in the prespecified arrangement.

3. Method according to one of the preceding claims, in which the prespecified geometric objects comprise lines, and in which, in order to determine the distance (DIST) between two of the lines,
- the lines are shifted in such a manner that a respective starting point of the two lines is at an origin of a coordinate system,
- the lines are rotated or stretched or compressed in such a manner that a respective end point of the two lines is at a prespecified point on an axis of the coordinate system,
- a separation between the two lines is determined at prespecified support points (24),
- the distance (DIST) between the two lines is determined on the basis of the separations between the two lines at the support points (24).

4. Method according to one of the preceding claims, in which the prespecified geometric objects are combined into the groups (GRP) in such a manner that the respective paired distances (DIST) between the prespecified geometric objects inside the corresponding group (GRP) are smaller than a prespecified first distance threshold value.

5. Method according to one of the preceding claims, in which error values are determined on the basis of the distances (DIST) between the prespecified geometric objects and their representatives (REP), and in which the error values are assigned to the identifier (ID) of the prespecified geometric objects and are stored.

6. Method according to Claim 2, in which the arrangement comprises a map (2), and in which the prespecified geometric objects comprise road courses, buildings, squares and/or natural objects.

7. Method according to one of the preceding claims, in which
- a possible number of representatives (R) is determined on the basis of a storage capacity (M) of the storage medium (20),
- the prespecified geometric objects are combined into groups (GRP) in such a manner that a number of groups (GRP) corresponds to the possible number of representatives (R).

8. Apparatus for storing prespecified geometric objects on a storage medium (20), the apparatus being designed to
- determine a respective distance (DIST) between each of the prespecified geometric objects and at least one other of the prespecified geometric objects, the distance (DIST) being representative of similarity of the corresponding prespecified geometric objects,
- combine the prespecified geometric objects into groups (GRP) on the basis of the distances (DIST) between the prespecified geometric objects in such a manner that the prespecified geometric objects are more similar to prespecified geometric objects in the same group (GRP) than to prespecified geometric objects in the other groups (GRP),
- determine a representative (REP) for each group (GRP) on the basis of the prespecified geometric objects inside the groups (GRP), said representative meeting a quality criterion with regard to its similarity to the prespecified geometric objects in the corresponding group (GRP), said quality criterion depending on the distances (DIST) between the representative (REP) and the individual prespecified geometric objects in the corresponding group (GRP),
- store the representatives (REP) of all groups (GRP),
- store only an identifier (ID) of the prespecified geometric object for each of the prespecified geometric objects in a manner representative of the prespecified geometric objects, a reference to the corresponding representative (REP) of the prespecified geometric object and values which prespecify a size and position of the corresponding representative (REP) on the basis of the size and position of the corresponding prespecified geometric objects.

9. Method for displaying prespecified geometric objects on a display apparatus, representatives (REP) being stored on a storage medium (20) in a manner representative of the prespecified geometric objects, and values which are dependent on a size and position of the prespecified geometric objects being stored on the storage medium (20) in a manner representative of a size and position of the representatives (REP), in which
- one of the representatives (REP) is determined for each prespecified geometric object, said representative representing a group (GRP) of prespecified geometric objects containing the corresponding prespecified geometric object and meeting a quality criterion with regard to its similarity to the prespecified geometric objects in the corresponding group (GRP), said quality criterion depending on the distances (DIST) between the representative (REP) and the individual prespecified geometric objects in the corresponding group (GRP),
- a position and size of the representative (REP) are determined for each of the determined representatives (REP) using the values,
- the representative (REP) is displayed in the position and size determined.

10. Method according to Claim 9, in which the representative (REP) and the values assigned to the latter are determined on the basis of an identifier (ID) which is stored in a manner representative of the prespecified geometric object and is assigned the representative (REP) and the values.

11. Method according to either of Claims 9 or 10, in which the prespecified geometric objects are arranged in a prespecified arrangement, and in which the values prespecify the size and position of the representatives (REP) in the prespecified arrangement.

12. Method according to either of claims 10 or 11, in which the arrangement comprises a map (2), and in which the prespecified geometric objects comprise road courses, buildings, squares and/or natural objects.

13. Apparatus for displaying prespecified geometric objects on a display apparatus, representatives (REP) being stored on a storage medium (20) in a manner representative of prespecified geometric objects, and values which are dependent on a size and position of the prespecified geometric objects being stored on the storage medium (20) in a manner representative of a size and position of the representatives (REP), the apparatus being designed to
- determine one of the representatives (REP) for each prespecified geometric object, the representative (REP) representing a group (GRP) of prespecified geometric objects containing the corresponding prespecified geometric object, and the representative (REP) meeting a quality criterion with regard to its similarity to the prespecified geometric objects in the corresponding group (GRP),
- determine a position and size of the representative (REP) for each of the determined representatives (REP) using the values,
- display the representative (REP) in the position and size determined.

14. Computer program product comprising a computer-readable storage unit with program instructions which can be executed by a computer and are designed to carry out the method according to one of Claims 1 to 7 and/or according to one of Claims 9 to 12.

## Revendications

1. Procédé de mise en mémoire sur un support (20) de mémoire d'objets géométriques donnés à l'avance, dans lequel
- on détermine respectivement une distance (DIST) de chacun des objets géométriques donnés à l'avance à au moins un autre des objets géométriques donnés à l'avance, distance qui est représentative d'une similitude des objets géométriques donnés à l'avance correspondants,
- en fonction des distances (DIST) des objets géométriques donnés à l'avance les uns par rapport aux autres, on rassemble les objets géométriques donnés à l'avance en groupes (GRP), de manière à ce que les objets géométriques donnés à l'avance soient, par rapport à des objets géométriques donnés à l'avance du même groupe (GRP), plus semblables que par rapport à des objets géométriques donnés à l'avance des autres groupes (GRP),
- pour chaque groupe (GRP), on détermine, en fonction des objets géométriques donnés à l'avance au sein des groupes (GRP), un représentant (REP), qui, au vu de sa similitude aux objets géométriques donnés à l'avance du groupe (GRP) correspondant, satisfait à un critère de qualité, qui dépend des distances (DIST) du représentant (REP) aux divers objets géométriques donnés à l'avance du groupe (GRP) correspondant,
- on mémorise les représentants (REP) de tous les groupes (GRP),
- en remplacement des objets géométriques donnés à l'avance pour chacun des objets géométriques donnés à l'avance, on mémorise une caractérisation (ID) de l'objet géométrique donné à l'avance, un renvoi au représentant (REP) correspondant de l'objet géométrique donné à l'avance et des valeurs, par lesquelles on donne à l'avance une dimension et une position du représentant (REP) correspondant en fonction de la dimension et de la position des objets géométriques donnés à l'avance correspondants.

2. Procédé suivant la revendication 1, dans lequel les objets géométriques donnés à l'avance sont disposés suivant un ordre donné à l'avance et dans lequel, par les valeurs, on donne à l'avance la dimension et la position du représentant (REP) dans l'ordre donné à l'avance.

3. Procédé suivant l'une des revendications précédentes, dans lequel les objets géométriques donnés à l'avance comprennent des lignes et dans lequel, pour la détermination de la distance (DIST) entre deux des lignes
- on décale les lignes, de manière à ce que respectivement un point de début des deux lignes se trouve dans une origine des coordonnées d'un système de coordonnées,
- on fait tourner ou on étire ou on comprime les lignes, de manière à ce que respectivement un point de fin des deux lignes se trouve en un emplacement donné à l'avance d'un axe du système de coordonnées,
- on détermine, en des points (24) d'appui donnés à l'avance, un éloignement entre les deux lignes,
- on détermine la distance (DIST) entre les deux lignes en fonction des éloignements des deux lignes aux points (24) d'appui.

4. Procédé suivant l'une des revendications précédentes, dans lequel on rassemble les objets géométriques donnés à l'avance en les groupes (GRP), de manière à ce que les distances (DIST), paire par paire respective des objets géométriques donnés à l'avance les uns par rapport aux autres au sein du groupe (GRP) correspondant, soient plus petites qu'une première valeur de seuil de distance donnée à l'avance.

5. Procédé suivant l'une des revendications précédentes, dans lequel on détermine, en fonction des distances (DIST) des objets géométriques donnés à l'avance à leurs représentants (REP), des valeurs d'erreur et dans lequel on affecte les valeurs d'erreur à la caractérisation (ID) des objets géométriques donnés à l'avance.

6. Procédé suivant la revendication 2, dans lequel l'ordre comprend une carte (2) géographique et dans lequel les objets géométriques donnés à l'avance comprennent des routes, des bâtiments, des places et/ou des objets naturels.

7. Procédé suivant l'une des revendications précédentes, dans lequel
- on détermine, en fonction d'une capacité (M) de mise en mémoire du support (20) de mémoire, un nombre (R) possible de représentants,
- on rassemble les objets géométriques donnés à l'avance en des groupes (GRP), de manière à ce qu'un nombre des groupes (GRP) corresponde au nombre (R) possible de représentants.

8. Dispositif de mise en mémoire d'objets géométriques donnés à l'avance sur un support (20) de mémoire, le dispositif étant constitué pour
- déterminer une distance (DIST) de chacun des objets géométriques donnés à l'avance à au moins un autre des objets géométriques donnés à l'avance, la distance (DIST) étant représentative d'une similitude des objets géométriques donnés à l'avance correspondants,
- regrouper des objets géométriques donnés à l'avance en groupes (GRP) en fonction des distances (DIST) des objets géométriques donnés à l'avance les uns par rapport aux autres, de manière à ce que les objets géométriques donnés à l'avance soient, par rapport à des objets géométriques donnés à l'avance du même groupe (GRP), plus semblables que par rapport à des objets géométriques donnés à l'avance des autres groupes (GRP),
- déterminer un représentant (REP) pour chaque groupe (GRP), qui, au vu de sa similitude aux objets géométriques donnés à l'avance du groupe (GRP) correspondant, satisfait un critère de qualité, qui dépend des distances (DIST) du représentant (REP) aux divers objets géométriques donnés à l'avance du groupe (GRP) correspondant, en fonction des objets géométriques donnés à l'avance au sein des groupes (GRP),
- mettre en mémoire les représentants (REP) de tous les groupes (GRP),
- mettre en mémoire seulement une caractérisation (ID) de l'objet géométrique donné à l'avance pour chacun des objets géométriques donnés à l'avance représentative des objets géométriques donnés à l'avance, un renvoi au représentant (REP) correspondant de l'objet géométrique donné à l'avance et des valeurs par lesquelles une grandeur et une dimension du représentant (REP) correspondant sont données à l'avance en fonction de la dimension et de la position des objets géométriques donnés à l'avance correspondants.

9. Procédé de représentation d'objets géométriques donnés à l'avance sur un dispositif d'affichage, dans lequel des représentants (REP) sont mémorisés sur un support (20) de mémoire d'une mémoire d'une manière représentative des objets géométriques donnés à l'avance et dans lequel, sur le support (20) de mémoire, sont mémorisées, d'une manière représentative d'une dimension et d'une position du représentant (REP), des valeurs, qui dépendent d'une dimension et d'une position des objets géométriques donnés à l'avance, dans lequel
- pour chaque objet géométrique donné à l'avance, on détermine l'un des représentants (REP), qui représente un groupe (GRP) des objets géométriques donnés à l'avance ayant l'objet géométrique donné à l'avance correspondant et qui satisfait, au vu de sa similitude aux objets géométriques donnés à l'avance du groupe (GRP) correspondant, un critère de qualité, qui dépend des distances (DIST) du représentant (REP) aux divers objets géométriques donnés à l'avance du groupe (GRP) correspondant,
- pour chacun des représentants (REP) déterminés, on détermine au moyen des valeurs une position et une dimension du représentant (REP),
- on représente le représentant (REP) dans la position et grandeur déterminées.

10. Procédé suivant la revendication 9, dans lequel on détermine le représentant (REP) et les valeurs qui lui sont affectées en fonction d'une caractérisation (ID), qui est mémorisée en remplacement de l'objet géométrique donné à l'avance et à laquelle sont affectés le représentant (REP) et les valeurs.

11. Procédé suivant l'une des revendications 9 ou 10, dans lequel les objets géométriques donnés à l'avance sont disposés suivant un ordre donné à l'avance et dans lequel, par les valeurs, on donne à l'avance la dimension et la position du représentant (REP) dans l'ordre donné à l'avance.

12. Procédé suivant l'une des revendications 10 ou 11, dans lequel l'ordre comprend une carte (2) géographique et dans lequel les objets géométriques donnés à l'avance comprennent des routes, des bâtiments, des places et/ou des objets naturels.

13. Dispositif de représentation d'objets géométriques donnés à l'avance sur un dispositif d'affichage dans lequel il est mis en mémoire, sur un support (20) de mémoire, d'une manière représentative d'objets géométriques donnés à l'avance, des représentants (REP) et dans lequel il est mis en mémoire, sur le support (20) de mémoire, d'une manière représentative d'une dimension et d'une position des représentants (REP), des valeurs, qui dépendent d'une dimension et d'une position des objets géométriques donnés à l'avance, le dispositif étant constitué pour
- déterminer l'un des représentants (REP) pour chaque objet géométrique donné à l'avance, le représentant (REP) représentant un groupe (GRP) des objets géométriques donnés à l'avance ayant l'objet géométrique donné à l'avance correspondant et dans lequel le représentant (REP) satisfait, au vu de sa similitude aux objets géométriques données à l'avance du groupe (GRP) correspondant, un critère de qualité,
- déterminer, pour chacun des représentants (REP) déterminés, au moyen des valeurs, une position et une dimension du représentant (REP),
- représenter le représentant (REP) en la position et dimension déterminées.

14. Produit de programme d'ordinateur, qui comprend une unité de mémoire pouvant être déchiffrée par ordinateur et ayant des instructions de programme, qui peuvent être réalisées par un ordinateur et qui sont constituées pour effectuer le procédé suivant l'une des revendications 1 à 7 et/ou suivant l'une des revendications 9 à 12.
